# EUROPEAN PATENT SPECIFICATION

(11) **EP 2 221 389 B1**
(45) Date of publication and mention of the grant of the patent: **03.01.2018**
(21) Application number: 08850887.4
(22) Date of filing: 12.11.2008
(51) Int. Cl.: C21D 1/06, C21D 1/18, C21D 6/00, C21D 9/40, C22C 38/00, C22C 38/46, C23C 8/22, C23C 8/38, C23C 8/26, C21D 1/78

(54) **METHOD OF HEAT-TREATING STEEL AND PROCESS FOR PRODUCING A MACHINE PART.**
VERFAHREN ZUR WÄRMEBEHANDLUNG VON STAHL UND VERFAHREN ZUR HERSTELLUNG EINES MASCHINENTEILS
PROCÉDÉ DE TRAITEMENT THERMIQUE DE L'ACIER ET PROCÉDÉ DE PRODUCTION D'UNE PIÈCE DE MACHINE

(30) Priority: 14.11.2007 JP 2007295892; 30.11.2007 JP 2007310368
(43) Date of publication of application: 25.08.2010
(60) Divisional application: 11180367.2
(73) Proprietor: NTN Corporation, Osaka-shi, Osaka 550-0003 (JP)
(72) Inventor: OHKI, Chikara, Kuwana-shi Mie 511-0811 (JP); YAGITA, Kazuhiro, Kuwana-shi Mie 511-0811 (JP)
(74) Representative: Bockhorni & Kollegen
(86) International application number: PCT/JP2008/070596
(87) International publication number: WO 2009/063909

(56) References cited:
- EP-A2- 1 413 631
- WO-A2-2006/071502
- JP-A- 2001 192 861
- JP-A- 2003 148 485
- JP-A- 2003 148 488
- JP-A- 2007 040 230
- US-A1- 2006 029 318

## Description

### TECHNICAL FIELD

The present invention relates generally to methods of heat treatment for steel, methods of producing mechanical components, and mechanical components, and particularly to methods of heat treatment for steel that include the step of nitriding an object of steel to be treated and containing at least 3.75 mass % of chromium, mechanical components that are formed of steel containing at least 3.75 mass % of chromium and have a surface layer portion nitrided, and methods of producing the mechanical components.

### BACKGROUND ART

Steel is sometimes nitrided in order to allow a member formed of the steel to have a surface layer portion enhanced in strength. A conventional steel nitriding method is representatively a gas soft nitriding treatment in which steel is heated in an atmosphere containing ammonia or a similar gas serving as a source of nitrogen to cause the nitrogen to penetrate into a surface layer portion of the steel. However, steel containing chromium in a large amount such as at least 3.75 mass %, for example, has a surface layer portion having chemically stable oxide film. When steel containing chromium in the large amount undergoes the gas soft nitriding treatment the steel does not have a surface layer portion penetrated by nitrogen and is thus not nitrided.

To address this, a plasma nitriding process is proposed as follows: an object of steel to be treated is placed in a vacuumed furnace and a gas containing a gas serving as a source of nitrogen is introduced into the furnace, and between the object and a member, such as a wall of the furnace, disposed to face the object a difference in potential is caused to cause glow discharge to cause nitrogen to penetrate into a surface layer portion of the steel configuring the object (see Japanese Patent Laying-open No. 2-57675 (Patent Document 1) for example). The plasma nitriding process is controlled for example as based on a spectral analysis of glow discharge, a density of a current flowing in the object, or the like, as proposed in Japanese Patent Laying-Open No. 7-118826 (Patent Document 2) and Japanese Patent Laying-Open No. 9-3646 (Patent Document 3).
Patent Document 1: Japanese Patent Laying-open No. 2-57675
Patent Document 2: Japanese Patent Laying-open No. 7-118826
Patent Document 3: Japanese Patent Laying-open No. 9-3646

Furthermore, from US 2006/029318 A1 a roller bearing is known, comprising: at least one first rolling part of a ceramic material; at least one second cooperating rolling part of a steel with a martensitic microstructure; the first and second rolling parts having respective contacting surfaces, at least a portion of the surface of the second rolling part being intended for rolling contact with the surface of the first rolling part, and causing residual compressive stresses to be formed beneath the surface of the second rolling part at least at the portion of the surface thereof and at least in a load-free state.

From EP 1 413 631 A2 a roller bearing that provides ball and roller bearing elements comprised of M50 steel and M50NiL steel is known, having surface hardnesses above 60 HRC, and in the range of 65-72 HRC. The hardness in the surface region is achieved by nitriding the surface to achieve a high hardness and extended life. This improvement is brought about by controlling the microstructure of the alloy by minimizing the formation of retained austenite. The material is tempered as required. The surface is then nitrided, but the nitriding operation is carefully controlled to avoid the formation of intergranular nitrides. Because of the method used to prevent the formation of intergranular nitrides, some carbon may be present to prevent the surface of the steel from becoming depleted of carbon.

### DISCLOSURE OF THE INVENTION

### PROBLEMS TO BE SOLVED BY THE INVENTION

When the plasma nitriding process and the method of controlling the process, as described above, are employed, however, it is difficult to prevent plasma-nitrided steel from having a surface layer portion penetrated by nitrogen having an amount reaching nitrogen's solid solubility limit (a solid solubility limit including nitrogen contained in precipitates). As such, when appropriately quenched and tempered steel is plasma-nitrided, it has a nitride of iron (Fe₃N, Fe₄N or the like) precipitated along a grain boundary. A nitride of iron having an aspect ratio of at least 2 and a length of at least 7.5 µm (hereinafter a nitride of iron formed along a grain boundary and having an aspect ratio of at least 2 and a length of at least 7.5 µm will be referred to as grain boundary precipitates) may serve as a point at which the steel starts to flake, fracture and the like.

More specifically, when an object to be treated that has been plasma-nitrided and thus has grain boundary precipitates is applied to a mechanical component and the mechanical component repeatedly experiences stress, it may flake, fracture, or the like in an early stage (i.e., reduced in fatigue resistance). Furthermore, when the mechanical component having the grain boundary precipitates experiences impactive stress, it may be easily damaged (i.e., reduced in toughness). Thus, while a mechanical component configured of steel having grain boundary precipitates has a surface layer portion having high hardness, the mechanical component can be reduced in fatigue resistance, toughness, and the like.

Accordingly the present invention contemplates a method of heat treatment for steel containing at least 3.75 mass % of chromium, that allows the steel to have a surface layer portion nitrided to have high hardness and can also reduce or prevent grain boundary precipitates, a method of producing a mechanical component formed of steel containing at least 3.75 mass % of chromium, that allows the mechanical component to have a surface layer portion nitrided to have high hardness and can also reduce or prevent grain boundary precipitates, and a mechanical component formed of steel containing at least 3.75 mass % of chromium, that can have a surface layer portion nitrided to have high hardness and also reduce or prevent grain boundary precipitates.

### MEANS FOR SOLVING THE PROBLEMS

The present invention in one aspect provides a method of heat treatment for steel, including the steps of: quench-hardening a steel; plasma-nitriding the steel; and maintaining the steel at a diffusion temperature wherein the diffusion step is performed after the plasma-nitriding step is completed. The step of quench-hardening a steel quench-hardens a steel containing at least 0.77 mass % and not more than 0.85 mass % of carbon, at least 0.01 mass % and not more than 0.25 mass % of silicon, at least 0.01 mass % and not more than 0.35 mass % of manganese, at least 0.01 mass % and not more than 0.15 mass % of nickel, at least 3.75 mass % and not more than 4.25 mass % of chromium, at least 4 mass % and not more than 4.5 mass % of molybdenum and at least 0.9 mass % and not more than 1.1 mass % of vanadium with a remainder consisting of iron and impurity. The step of plasma-nitriding the steel plasma-nitrides the quench-hardened steel. The step of maintaining the steel at a diffusion temperature maintains the plasma-nitrided steel at a diffusion temperature of at least 300°C and not more than 480°C.

The present inventors have elaborately studied methods including a plasma nitriding process for heat treatment for steel to allow the steel to have a surface layer portion with sufficient hardness and also reduce/prevent grain boundary precipitates. As a result, the present inventors have found that plasma-nitrided steel held at at least 300°C and not more than 480°C for diffusion can ensure a surface layer portion having sufficient hardness and also reduce grain boundary precipitates, as will be described below:
More specifically, plasma-nitriding steel to have a surface penetrated by nitrogen often results in the steel having in a vicinity of the surface a layer having grain boundary precipitates generated therein (or a grain boundary precipitate layer). When steel is penetrated by nitrogen to a depth (i.e., a distance from a surface of the steel) for example of 0.1 mm or larger, as required for a mechanical component to have better characteristics, the steel has a grain boundary precipitate layer having a thickness larger than that removed after the plasma nitriding process when the mechanical component undergoes a finishing step, and the completed mechanical component has a surface with the grain boundary precipitate layer remaining therein. The layer has grain boundary precipitates therein, resulting in the mechanical component having reduced fatigue resistance and the like.

In contrast, subjecting plasma-nitrided steel to a diffusion step holding the steel at a temperature of 300°C or higher allows nitrogen having penetrated into the steel through the plasma nitriding process to reach a desired deeper region (or a region having a larger distance from a surface of the steel) within a tolerated period of time in an actual production process. Even if a plasma nitriding process is performed to cause nitrogen to penetrate into steel to a depth falling within a range allowing a finishing step to remove a grain boundary precipitate layer, the diffusion step allows the nitrogen having penetrated into the steel to reach a desired region.

Furthermore, the diffusion step can be performed at an increased temperature to allow nitrogen having penetrated into steel to reach a desired region in a shorter period of time. The diffusion step performed at a temperature exceeding 480°C, however, heats the steel to reduce the steel's hardness and hence affect the surface layer portion's hardness to cancel the surface layer portion's hardness increased through the plasma nitriding process, and it is thus difficult to ensure that the surface layer portion has sufficient hardness.

In contrast, the present invention in one aspect provides a method of heat treatment for steel that is performed as follows: Initially, steel is quench-hardened, and subsequently plasma-nitrided to cause nitrogen to penetrate into a surface layer portion of the steel, which contains at least 3.75 mass % of chromium, to provide a nitride layer. This provides the steel with a surface layer portion of high hardness. The steel is then held at a diffusion temperature of at least 300°C and not more than 480°C to allow the nitrogen having penetrated into the steel to reach a desired region while preventing the increased hardness that is obtained through the formation of the nitride layer from being cancelled. The present method of heat treatment for steel can thus provide a method of heat treatment for steel containing at least 3.75 mass % of chromium, that allows the steel to have a surface layer portion nitrided to have high hardness and can also reduce or prevent grain boundary precipitates.

In the present method of heat treatment for steel, preferably, the diffusion temperature is not more than 430°C. The diffusion temperature controlled as above can prevent the diffusion step from heating the steel to disadvantageously reduce the steel in hardness, and thus allows the steel to have a surface layer portion provided with higher hardness.

When the steel is held at the diffusion temperature in the above range, the diffusion temperature may be fixed at a constant temperature falling within the range or may be varying within the range.

The present invention in one aspect provides a method of producing a mechanical component, including the steps of: preparing a steel member formed of a steel containing at least 0.77 mass % and not more than 0.85 mass % of carbon, at least 0.01 mass % and not more than 0.25 mass % of silicon, at least 0.01 mass % and not more than 0.35 mass % of manganese, at least 0.01 mass % and not more than 0.15 mass % of nickel, at least 3.75 mass % and not more than 4.25 mass % of chromium, at least 4 mass % and not more than 4.5 mass % of molybdenum and at least 0.9 mass % and not more than 1.1 mass % of vanadium with a remainder consisting of iron and impurity, and generally shaped in a form of a mechanical component; and performing a heat treatment including quenching and nitriding the steel member. The heat treatment is performed in the method of heat treatment for steel according to the present invention as described above.

The present method of producing a mechanical component allows a heat treatment to be performed in the present method of heat treatment for steel, as described above, which is suitable for nitriding an object to be treated that is formed of steel containing at least 3.75 mass % of chromium, and the present method of producing a mechanical component can thus produce a mechanical component formed of steel containing at least 3.75 mass % of chromium, that has a surface layer portion nitrided to have high hardness and also reduces/prevents grain boundary precipitates.

As it is produced in the present method of producing a mechanical component, the present mechanical component is a mechanical component formed of steel containing at least 3.75 mass % of chromium, that has a surface layer portion nitrided to have high hardness and also reduces/prevents grain boundary precipitates.

The present mechanical component may be used as a component configuring a bearing. The present mechanical component that has a surface layer portion nitrided and thus reinforced and also reduces/prevents grain boundary precipitates is suitable as a component configuring a bearing, which is a mechanical component required to have fatigue resistance, wear resistance, and the like.

The above mechanical component may be used to configure a rolling bearing including a bearing ring and a rolling element arranged on an annular raceway in contact with the bearing ring. More specifically, one of or preferably both the bearing ring and the rolling element is/are the above mechanical component(s). The present mechanical component that has a surface layer portion nitrided and thus reinforced and also reduces/prevents grain boundary precipitates allows the rolling bearing to have long life.

### EFFECTS OF THE INVENTION

As is apparent from the above description, the present method of heat treatment for steel can provide a method of heat treatment for steel containing at least 3.75 mass % of chromium, that allows the steel to have a surface layer portion nitrided to have high hardness and can also reduce or prevent grain boundary precipitates. Furthermore, the present method of producing a mechanical component can provide a method of producing a mechanical component formed of steel containing at least 3.75 mass % of chromium, that allows the mechanical component to have a surface layer portion nitrided to have high hardness and can also reduce or prevent grain boundary precipitates. Furthermore, the present mechanical component can provide a mechanical component formed of steel containing at least 3.75 mass % of chromium, that can have a surface layer portion nitrided to have high hardness and also reduce or prevent grain boundary precipitates.

### BRIEF DESCRIPTION OF THE DRAWINGS

Fig. 1 is a schematic cross section of a configuration of a deep groove ball bearing including a mechanical component in a first embodiment.
Fig. 2 is a schematic cross section of a configuration of a thrust needle roller bearing including a mechanical component in a first exemplary variation.
Fig. 3 is a schematic cross section of a configuration of a constant velocity joint including a mechanical component in a second exemplary variation.
Fig. 4 is a schematic cross section taken along a line IV-IV shown in Fig. 3.
Fig. 5 is a schematic cross section of the Fig. 3 constant velocity joint forming an angle.
Fig. 6 generally illustrates a method of producing the mechanical component and a method of producing a mechanical element including the mechanical component in the first embodiment.
Fig. 7 is a diagram for illustrating the details of a heat treatment step included in the method of producing the mechanical component.
Fig. 10 is an optical micrograph of a microstructure around the surface of Example A of the present invention.
Fig. 11 illustrates a hardness distribution around the surface of Example A of the present invention.
Fig. 12 illustrates distributions of concentrations of carbon and nitrogen around the surface of Example A of the present invention.
Fig. 13 is an optical micrograph of a microstructure around the surface of comparative example A.
Fig. 14 illustrates a hardness distribution around the surface of comparative example A.
Fig. 15 illustrates distributions of concentrations of carbon and nitrogen around the surface of comparative example A.
Fig. 16 is a diagram (Avrami's plot) showing the relation between heat treatment times at respective heating temperatures in a diffusion step and the hardness levels of specimens.
Fig. 17 illustrates hardness distributions on surface layer portions of specimens before and after a diffusion step of maintaining the specimens at 430°C for 50 hours.

### DESCRIPTION OF THE REFERENCE SIGNS

1: deep groove ball bearing, 2: thrust needle roller bearing, 3: constant velocity joint, 11: outer ring, 11A: outer ring raceway surface, 12: inner ring, 12A: inner ring raceway surface, 13: ball, 13A: ball rolling contact surface, 14, 24: cage, 21: bearing washer, 21A: bearing washer raceway surface, 23: needle roller, 31: inner race, 31A: inner race ball groove, 32: outer race, 32A: outer race ball groove, 33: ball, 34: cage, 35, 36: shaft, 90: grain boundary precipitates.

### BEST MODES FOR CARRYING OUT THE INVENTION

Hereinafter reference will be made to the drawings to describe the present invention in embodiments. In the figures, identical or corresponding components are identically denoted and will not be described repeatedly.

### First Embodiment

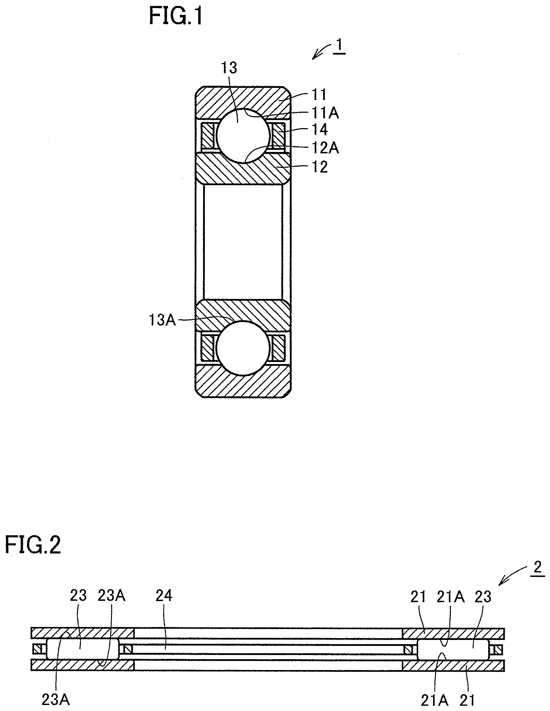

Initially reference will be made to Fig. 1 to describe a deep groove ball bearing implementing a rolling bearing in a first embodiment of the present invention.

With reference to Fig. 1, a deep groove ball bearing 1 includes an annular outer ring 11, an annular inner ring 12 arranged to be inner than outer ring 11, and rolling elements implemented as a plurality of balls 13 arranged between outer and inner rings 11 and 12 and held in an annular cage 14. Outer ring 11 has an inner circumferential surface having an outer ring raceway surface 11A and inner ring 12 has an outer circumferential surface having an inner ring raceway surface 12A Outer ring 11 and inner ring 12 are disposed such that inner ring raceway surface 12A and outer ring raceway surface 11A face each other. The plurality of balls 13 are held in a rollable manner on an annular raceway, with their rolling contact surfaces 13A in contact with inner ring raceway surface 12A and outer ring raceway surface 11A, disposed at a predetermined pitch in the circumferential direction by means of cage 14. By such a configuration, outer ring 11 and inner ring 12 of deep groove ball bearing 1 can be rotated relative to each other.

Herein, of mechanical components, i.e., outer ring 11, inner ring 12, ball 13 and cage 14, outer ring 11, inner ring 12 and ball 13 are in particular required to have rolling contact fatigue resistance, and wear resistance. At least one of them that is the present mechanical component that is formed of steel containing at least 3.75 mass % of chromium, and also has a surface layer portion nitrided to have high hardness and also reduces/prevents grain boundary precipitates, allows deep groove ball bearing 1 to have long life.

Hereinafter reference will be made to Fig. 2 to describe a thrust needle roller bearing in a first exemplary variation of the present embodiment.

With reference to Fig. 2, thrust needle roller bearing 2 includes a pair of bearing washers 21 in the form of a disk, serving as a rolling contact member arranged such that their respective, one main surfaces face each other, a plurality of needle rollers 23 serving as a rolling contact member, and an annular cage 24. The plurality of needle rollers 23 are held in a rollable manner on an annular raceway, in contact with bearing washer raceway surface 21A formed at the main surfaces of the pair of bearing washers 21 facing each other, disposed at a predetermined pitch in the circumferential direction by means of cage 24. By such a configuration, the pair of bearing washers 21 of thrust needle roller bearing 2 can be rotated relative to each other.

Herein, of mechanical components, i.e., bearing washer 21, needle roller 23 and cage 24, bearing washer 21 and needle roller 23 are in particular required to have rolling contact fatigue resistance, and wear resistance. At least one of them that is the present mechanical component that is formed of steel containing at least 3.75 mass % of chromium, and also has a surface layer portion nitrided to have high hardness and also reduces/prevents grain boundary precipitates, allows thrust needle roller bearing 2 to have long life.

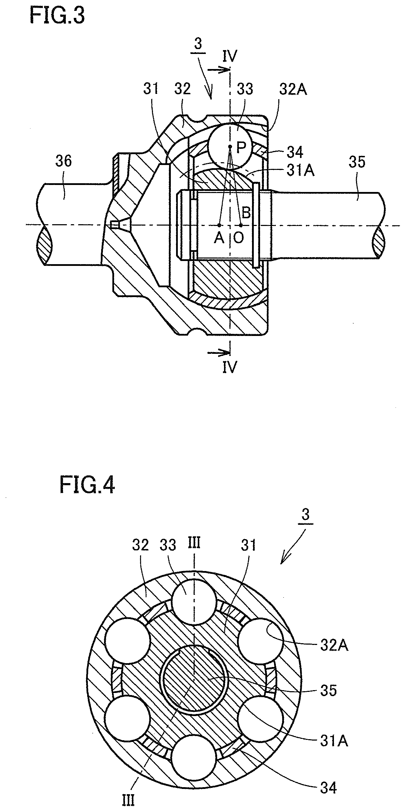

With reference to Fig. 3 to Fig. 5, the present embodiment in a second exemplary variation provides a constant velocity joint, as will be described hereinafter. Note that Fig. 3 corresponds to a schematic cross section taken along a line III-III shown in Fig. 4.

With reference to Fig. 3 to Fig. 5, a constant velocity joint 3 includes an inner race 31 coupled to a shaft 35, an outer race 32 arranged to surround the outer circumferential side of inner race 31 and coupled to a shaft 36, a torque transmitting ball 33 arranged between inner race 31 and outer race 32, and a cage 34 holding ball 33. Ball 33 is arranged in contact with an inner race ball groove 31A formed at the outer circumferential surface of inner race 31 and an outer race ball groove 32A formed at the inner circumferential surface of outer race 32, and is held by cage 34 to avoid falling off.

As shown in Fig. 3, inner race ball groove 31A and outer race ball groove 32A located at the outer circumferential surface of inner race 31 and the inner circumferential surface of outer race 32, respectively, are formed in a curve (arc) with points A and B equally spaced apart at the left and right on the axis passing through the center of shafts 35 and 36 in a straight line from the joint center O on the axis as the center of curvature. In other words, inner race ball groove 31A and outer race ball groove 32A are formed such that the trajectory of center P of ball 33 that rolls in contact with inner race ball groove 31A and outer race ball groove 32A corresponds to a curve (arc) with point A (inner race center A) and point B (outer race center B) as the center of curvature. Accordingly, ball 33 is constantly located on the bisector of an angle (∠ AOB) with respect to the axis passing through the center of shafts 35 and 36 even when the constant velocity joint forms an angle (when the constant velocity joint operates such that the axes passing through the center of shafts 35 and 36 cross).

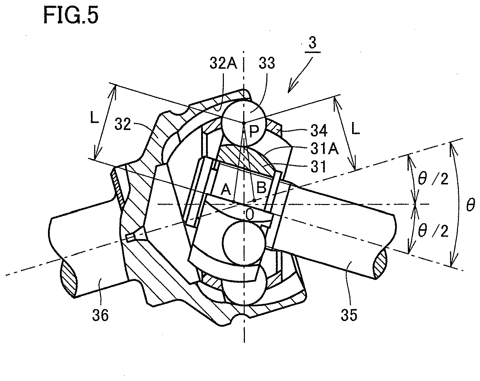

Constant velocity joint 3 operates, as will be described hereinafter. With reference to Fig. 3 and Fig. 4, when the rotation about the axis is transmitted to one of shafts 35 and 36 at constant velocity joint 3, this rotation is transmitted to the other of shafts 35 and 36 via ball 33 fitted in inner race ball groove 31A and outer race ball groove 32A In the case where shafts 35 and 36 form an angle θ as shown in Fig. 5, ball 33 is guided by inner race ball groove 31A and outer race ball groove 32A with inner race center A and outer race center B as the center of curvature to be held at a position where its center P is located on the bisector of ∠ AOB. Since inner race ball groove 31A and outer race ball groove 32A are formed such that the distance from joint center O to inner race center A is equal to the distance from joint center O to outer race center B, the distance from center P of ball 33 to respective inner race center A and outer race center B is equal. Thus, triangle OAP is congruent to triangle OBP. As a result, the distances L from center P of ball 33 to shafts 35 and 36 are equal to each other, and when one of shafts 35 and 36 rotates about the axis, the other also rotates at constant velocity. Thus, constant velocity joint 3 can ensure constant velocity even in the state where shafts 35 and 36 constitute an angle. Cage 34 serves, together with inner race ball groove 31A and outer race ball groove 32A, to prevent ball 33 from jumping out of inner race ball groove 31A and outer race ball groove 32A when shafts 35 and 36 rotate, and also to determine joint center O of constant velocity joint 3.

Herein, of mechanical components, i.e., inner race 31, outer race 32, ball 33 and cage 34, inner race 31, outer race 32 and ball 33 are in particular required to have rolling contact fatigue resistance, and wear resistance. At least one of them that is the present mechanical component that is formed of steel containing at least 3.75 mass % of chromium, and also has a surface layer portion nitrided to have high hardness and also reduces/prevents grain boundary precipitates, allows constant velocity joint 3 to have long life.

A method of producing a mechanical component, and a rolling bearing, a constant velocity joint and the like mechanical element including the mechanical component according to the first embodiment will now be described.

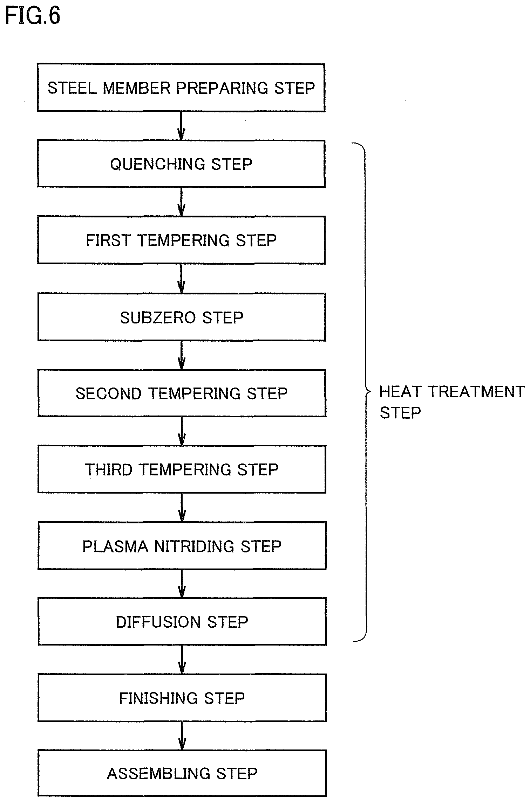

Referring to Fig. 6, first, steel members made of steel containing at least 0.77 mass % and not more than 0.85 mass % of carbon, at least 0.01 mass % and not more than 0.25 mass % of silicon, at least 0.01 mass % and not more than 0.35 mass % of manganese, at least 0.01 mass % and not more than 0.15 mass % of nickel, at least 3.75 mass % and not more than 4.25 mass % of chromium, at least 4 mass % and not more than 4.5 mass % of molybdenum and at least 0.9 mass % and not more than 1.1 mass % of vanadium with a remainder consisting of iron and impurity, and formed into substantial shapes of mechanical components are prepared, i.e., a steel member preparing step is carried out. More specifically, working operations such as cutting, forging and turning are performed on steel bars or steel wires containing the aforementioned components, thereby preparing steel members formed into substantial shapes of the mechanical components such as outer ring 11, bearing washer 21, inner race 31 and the like as the mechanical components.

Then, a heat treatment step is carried out by performing a heat treatment including quenching and nitriding the aforementioned steel members prepared in the steel member preparing step. The details of this heat treatment step will be described later.

Then, a finishing step performing finishing etc. on the steel members subjected to the heat treatment step is carried out. More specifically, inner ring raceway surface 12A, bearing washer raceway surface 21A, outer race ball groove 32A and the like of the steel members subjected to the heat treatment step are polished, for example. This completes a mechanical component in the present embodiment and the method of producing the mechanical component in the present embodiment is completed.

Furthermore, the assembling step of assembling the completed mechanical components into a mechanical element is carried out. More specifically, the mechanical components of the present invention produced through the aforementioned steps, i.e., outer ring 11, inner ring 12, balls 13 and cage 14, for example, are assembled into deep groove ball bearing 1. Thus, a mechanical element including a mechanical component of the present invention is produced.

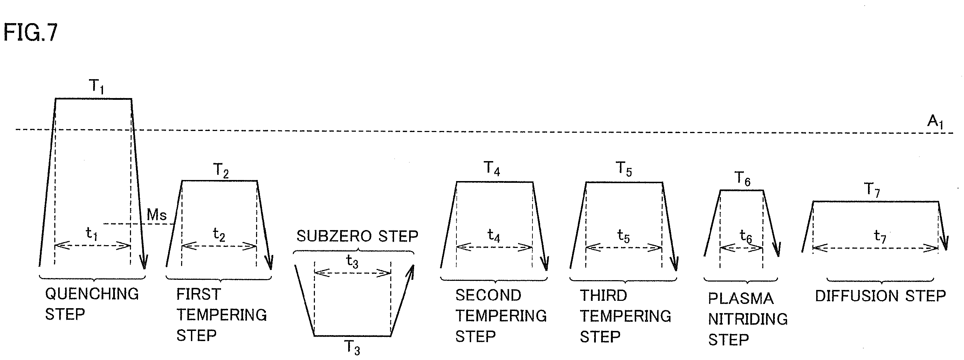

The details of the heat treatment step included in the method of producing the mechanical component in the present embodiment will now be described with reference to Fig. 7. Referring to Fig. 7, time shown in the horizontal direction elapses rightward. Referring to Fig. 7, further, temperature shown in the vertical direction is increased upward.

Referring to Fig. 7, the quenching step of quenching the steel members as the objects to be treated is first carried out in the heat treatment step in the method of producing the mechanical component according to the present embodiment. More specifically, the steel members are heated to a temperature T₁ exceeding a transformation temperature A₁ in a vacuum or a salt bath, maintained at this temperature for a time t₁, and thereafter cooled from the temperature T₁ exceeding the transformation temperature A₁ to a temperature below a point M₅, to be quenched.

The transformation temperature A₁ denotes a point corresponding to a temperature at which the structure of the steel starts transforming from ferrite into austenite when the same is heated. The point M₅ denotes a point corresponding to a temperature at which the steel having transformed into austenite starts transforming into martensite when the same is cooled.

Then, the first tempering step is carried out for tempering the steel members subjected to the quenching. More specifically, the steel members are heated to a temperature T₂ less than the transformation temperature A₁ in a vacuum, maintained at this temperature for a time t₂, and thereafter cooled, to be tempered. Thus, residual stress resulting from the quenching of the steel members is relaxed, and strain resulting from the heat treatment is suppressed.

Then, the subzero step is carried out on the steel members subjected to the first tempering step. More specifically, a subzero treatment is performed by spraying liquid nitrogen, for example, onto the steel members for cooling the steel members to a temperature T₃ less than 0°C, and maintaining the same at this temperature for a time t₃. Thus, retained austenite formed by the quenching of the steel members transforms into martensite, for stabilizing the structure of the steel.

Then, the second tempering step is carried out on the steel members subjected to the subzero step. More specifically, the steel members are heated to a temperature T₄ less than the transformation temperature A₁ in a vacuum, maintained at this temperature for a time t₄, and thereafter cooled, to be tempered. Thus, residual stress resulting from the subzero treatment of the steel members is relaxed, and strain is suppressed.

Then, the steel members subjected to the second tempering step are tempered again through the third tempering step. More specifically, the steel members are heated to a temperature T₅ less than the transformation temperature A₁ in a vacuum, maintained at this temperature for a time t₅, and thereafter cooled, to be tempered similarly to the aforementioned second tempering step. The temperature T₅ and the time t₅ can be set similarly to the temperature T₄ and the time t₄ in the second tempering step respectively. Thus, residual stress resulting from the subzero treatment of the steel members is relaxed and strain is suppressed, similarly to the second tempering step. The second and third tempering steps may be carried out as a single step.

Then, the plasma nitriding step is carried out on the steel members subjected to the third tempering step. More specifically, the steel members are inserted into a plasma nitriding furnace into which nitrogen (N₂) and at least one element selected from the group consisting of hydrogen (H₂), methane (CH₄) and argon (Ar) are introduced so that the pressure is at least 50 Pa and not more than 5000 Pa, and the steel members are heated to a temperature T₆ under conditions of a discharge voltage of at least 50 V and not more than 1000 V and a discharge current of at least 0.001 A and not more than 400 A, maintained at this temperature for a time t₆, and thereafter cooled, to be plasma-nitrided, for example. Thus, nitrogen penetrates into the surface layer portions of the steel members, thereby improving the strength of the surface layer portions. The temperature T₆ can be set to at least 300°C and not more than 550°C, for example, and the time t₆ can be set to at least one hour and not more than 80 hours. The heat treatment conditions such as the temperature T₆ and the time t₆ can be so decided that grain boundary precipitate layers formed in the plasma nitriding treatment have such thicknesses that the grain boundary precipitate layers can be removed in the finishing step in consideration of removal amounts in the finishing performed in the finishing step.

When the steel constituting the steel members is AMS 6490 (AISI M50), the pressure, the discharge voltage, the discharge current, the temperature T₆ and the time t₆ in the plasma nitriding step are preferably set to at least 50 Pa and not more than 1000 Pa, at least 50 V and not more than 600 V, at least 0.001 A and not more than 300 A, at least 350°C and not more than 450°C and at least one hour and not more than 50 hours respectively.

Then, the diffusion step is carried out on the steel members subjected to the plasma nitriding step. More specifically, the steel members are heated to a temperature T₇ in a vacuum and maintained at this temperature for a time t₇ to be diffusion-treated, for example. The temperature T₇ can be set to at least 300°C and not more than 480°C, preferably at least 300°C and not more than 430°C, and the time t₇ can be set to at least 50 hours and not more than 300 hours. Thus, the nitrogen having penetrated into the steel can be made to reach desired regions while suppressing cancellation of increase in the hardness of the surface layer portions resulting from formation of nitrided layers. The heat treatment step in the present embodiment is thus completed.

According to the method of heat treatment for steel in the present embodiment, as hereinabove described, a surface layer portion of high hardness can be formed by nitriding a surface layer portion of steel containing at least 3.75 mass % of chromium, and formation of grain boundary precipitates can be suppressed.

According to the method of producing a mechanical component in the above embodiment, a mechanical component made of steel containing at least 3.75 mass % of chromium, provided with surface layer portions of high hardness by nitriding the surface layer portions, and inhibited from formation of grain boundary precipitates can be produced. More specifically, for example, when a steel member completely finished is cut along a section perpendicular to the surface thereof and five fields of view of square regions of 150 µm on each side including the surface are randomly observed with an optical microscope or a scanning electron microscope (SEM), the number of detected nitrides of iron (i.e., grain boundary precipitates (Fe₃N or Fe₄N or the like)) having an aspect ratio of at least 2 and a length of at least 7.5 µm can be reduced to not more than one. Furthermore when 20 fields of view are similarly observed, the number of detected grain boundary precipitates can also be reduced to not more than one.

Furthermore in the above embodiment the mechanical component is a mechanical component formed of steel containing at least 3.75 mass % of chromium, that has a surface layer portion nitrided to have high hardness and reduces or prevents grain boundary precipitates.

### (Example 1)

Example 1 of the present invention will now be described. A sample having a structure similar to that of the present mechanical component was actually prepared in the method of producing the mechanical component according to the present invention that adopts the method of heat treatment for steel according to the present invention, and subjected to an experiment of confirming that formation of grain boundary precipitates on a surface layer portion was suppressed. The procedure of the experiment is as follows:
First, a specimen having an outer diameter ϕ of 40 mm, an inner diameter ϕ of 30 mm and a thickness *t* of 16 mm was produced by preparing and working a steel material made of AMS 6490 (AISI M50) containing at least 0.77 mass % and not more than 0.85 mass % of carbon, at least 0.01 mass % and not more than 0.25 mass % of silicon, at least 0.01 mass % and not more than 0.35 mass % of manganese, at least 0.01 mass % and not more than 0.15 mass % of nickel, at least 3.75 mass % and not more than 4.25 mass % of chromium, at least 4 mass % and not more than 4.5 mass % of molybdenum and at least 0.9 mass % and not more than 1.1 mass % of vanadium with a remainder consisting of iron and impurity.

Then, a heat treatment step employing the present heat treatment method for steel described with reference to Fig. 7 in the first embodiment was carried out on this specimen. The temperatures T₁, T₂, T₃, T₄ and T₅ and the times t₁, t₂, t₃, t₄ and t₅ were so set that the hardness of the specimen after the third tempering step was at least 58 HRC and not more than 65 HRC, while the temperatures T₆ and T₇ were both set to 430°C and the times t₆ and t₇ were set to 10 hours and 160 hours respectively. In the plasma nitriding step, the discharge voltage and the discharge current were controlled in the ranges of at least 200 V and not more than 450 V and at least 1 A and not more than 5 A respectively, so that the treatment temperature T₆ in the plasma nitriding was 430°C. In the plasma nitriding step, further, gas was introduced into a furnace in the ratio of nitrogen (N₂):hydrogen (H₂) = 1:1 so that the pressure in the furnace was at least 267 Pa and not more than 400 Pa in the plasma nitriding.

The diffusion step was so carried out that the specimen was heated in an atmosphere furnace with an atmosphere of nitrogen to adjust the total of a carbon concentration and a nitrogen concentration in the surface of the specimen being not more than 1.7 mass %. The specimen subjected to the present heat treatment method for steel was employed as the sample according to Example of the present invention (Example A of the present invention).

On the other hand, a heat treatment step similar to the aforementioned heat treatment method for steel described in the above embodiment with reference to Fig. 7 was carried out on a similarly prepared specimen of AMS 6490 without carrying out the diffusion step, i.e., a heat treatment step departing from the scope of the present invention was carried out. The temperatures T₁, T₂, T₃, T₄ and T₅ and the times t₁, t₂, t₃, t₄ and t₅ were so set that the hardness of the specimen after the third tempering step was at least 58 HRC and not more than 65 HRC, while the temperature T₆ was set to 480°C and the time t₆ was set to 30 hours. In the plasma nitriding step, the discharge voltage and the discharge current were controlled in the ranges of at least 200 V and not more than 450 V and at least 1 A and not more than 5 A respectively, so that the treatment temperature T₆ in the plasma nitriding was 480°C. In the plasma nitriding step, further, gas was introduced into a furnace in the ratios of nitrogen (N₂):hydrogen (H₂):methane (CH₄) = 79:80:1 so that the pressure in the furnace was at least 267 Pa and not more than 400 Pa in the plasma nitriding. The specimen subjected to the aforementioned heat treatment method for steel that departs from the scope of the present invention was employed as a sample according to comparative example (a comparative example A).

The samples according to Example A of the present invention and comparative example A prepared in the aforementioned manner were cut along sections perpendicular to the surfaces thereof, and these sections were polished. Further, the polished sections were etched with an etchant, and five fields of view of square regions of 150 µm on each side including the surface were thereafter randomly observed on each sample.

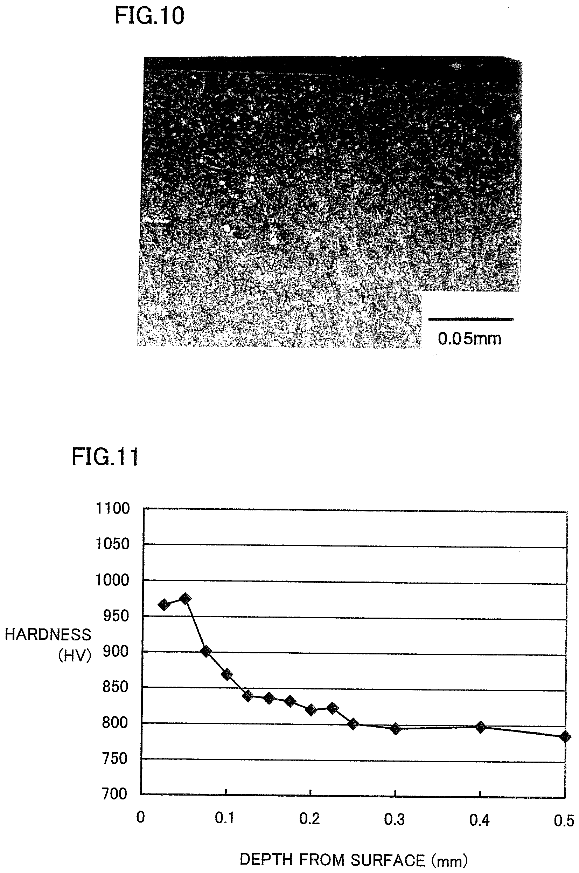

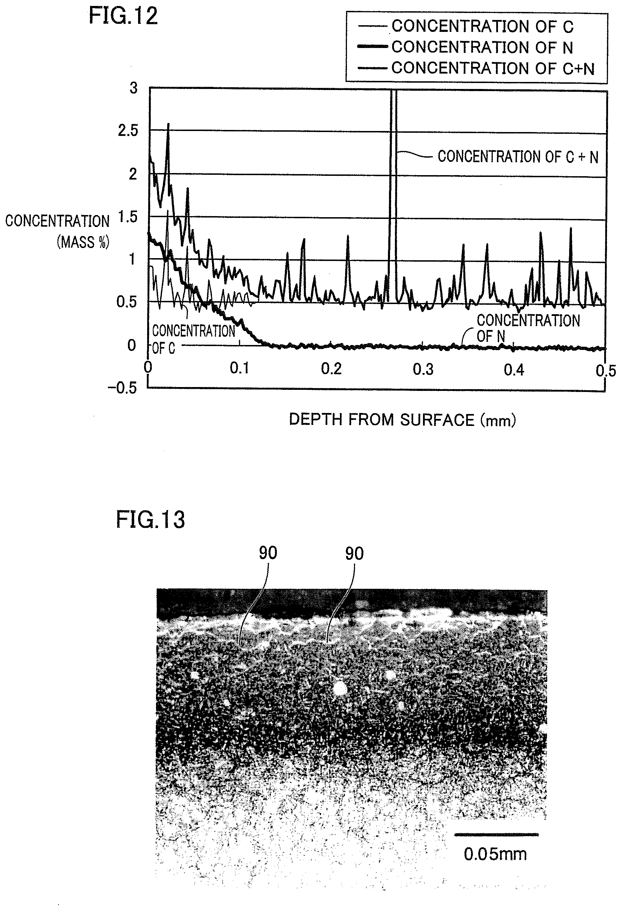

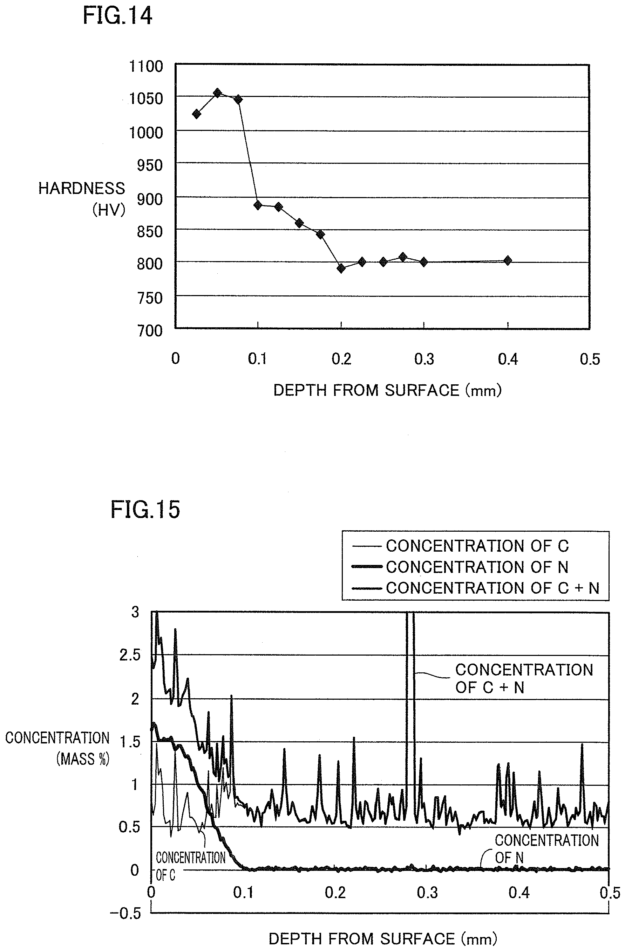

The results of the experiment will now be described. Referring to Fig. 10 and Fig. 13, upper portions of photographs correspond to the surfaces of the samples. Referring to Fig. 11 and Fig. 14, the axes of abscissas show depths (distances) from the surfaces, and the axes of ordinates show hardness levels (Vickers hardness). Referring to Fig. 12 and Fig. 15, the axes of abscissas show the depths (distances) from the surfaces and the axes of ordinates show the concentrations of carbon and nitrogen, while carbon concentrations (C concentrations), nitrogen concentrations (N concentrations) and totals (C + N concentrations) of the carbon concentrations and the nitrogen concentrations are shown in these drawings.

Referring to Fig. 10, no grain boundary precipitates (nitride of iron having an aspect ratio of at least 2 and a length of at least 7.5 µm) are observed on the surface layer portion of the sample according to Example A of the present invention, and the sample has an excellent microstructure. Referring to Fig. 11 and Fig. 12, a region of the sample according to Example A of the present invention within 0.5 mm in depth from the surface has sufficient hardness of at least 950 HV, with penetration of a sufficient quantity of nitrogen. When finishing such as polishing is performed on the surface of a steel member subjected to a heat treatment similar to that in Example A of the present invention, a mechanical component having a surface layer portion of high hardness and reducing/preventing grain boundary precipitates can be produced.

Referring to Fig. 13, on the other hand, a large number of grain boundary precipitates 90 are observed in the surface layer portion of the sample according to comparative example A out of the range of the present invention. Referring to Fig. 14 and Fig. 15, a region of the sample according to comparative example A within 0.5 mm in depth from the surface has sufficient hardness of at least 950 HV with penetration of a sufficient quantity of nitrogen, similarly to the sample according to Example A of the present invention. When finishing such as polishing is performed on the surface of a steel member subjected to a heat treatment similar to that in comparative example A, therefore, a mechanical component having grain boundary precipitates remaining in a surface layer portion is obtained, although the surface layer portion thereof has high hardness. This mechanical component cannot be regarded as having sufficient fatigue resistance and toughness as described above.

Thus, it has been confirmed that according to the method of producing the mechanical component according to the present invention that adopts the method of heat treatment for steel according to the present invention, a mechanical component made of steel containing at least 3.75 mass % of chromium, provided with surface layer portions of high hardness by nitriding the surface layer portions, and inhibited from formation of grain boundary precipitates can be produced.

### (Example 2)

Example 2 of the present invention will now be described. An experiment of investigating the proper range of the heating temperature in the diffusion step of the present heat treatment method for steel was conducted. The procedure of the experiment is as follows:
First, a specimen having an outer diameter ϕ of 40 mm, an inner diameter ϕ of 30 mm and a thickness *t* of 16 mm was produced by preparing and working a steel member made of AMS 6490 (AISI M50) containing at least 0.77 mass % and not more than 0.85 mass % of carbon, at least 0.01 mass % and not more than 0.25 mass % of silicon, at least 0.01 mass % and not more than 0.35 mass % of manganese, at least 0.01 mass % and not more than 0.15 mass % of nickel, at least 3.75 mass % and not more than 4.25 mass % of chromium, at least 4 mass % and not more than 4.5 mass % of molybdenum and at least 0.9 mass % and not more than 1.1 mass % of vanadium with a remainder consisting of iron and impurity.

Then, the steps from the quenching step to the third tempering step included in the heat treatment step employing the present method of heat-treating steel described in the first embodiment with reference to Fig. 7 were carried out on this specimen similarly to the case of Example A of the present invention in Example 1. Then, a step similar to the diffusion step was carried out by maintaining the specimen at temperatures of 430°C to 570°C for various times, and hardness of the specimen was measured. The results of the measurement were analyzed on the basis of reaction kinetics, for calculating the relation between the heat treatment time (diffusion time) at each heating temperature in the diffusion step and the hardness.

On the other hand, another experiment was conducted by carrying out the steps from the quenching step to the third tempering step on a similar specimen similarly to the case of Example A of the present invention in Example 1 and thereafter actually performing a plasma nitriding step and a diffusion step, for confirming a hardness distribution in the specimen. In the plasma nitriding step, plasma nitriding was performed by controlling a discharge voltage and a discharge current in the ranges of at least 200 V and not more than 450 V and at least 1 A and not more than 5 A respectively so that the treatment temperature T₆ in the plasma nitriding was 480°C and maintaining the specimen at this temperature for one hour. In the plasma nitriding step, further, gas was introduced into a furnace in the ratio of nitrogen (N₂):hydrogen (H₂) = 1:1 so that the pressure in the furnace was at least 267 Pa and not more than 400 Pa in the plasma nitriding. In addition, the diffusion step was carried out on the specimen completely subjected to the plasma nitriding step by maintaining the same at 480°C for 50 hours. A hardness distribution on a surface layer portion of the specimen was measured before and after the diffusion step.

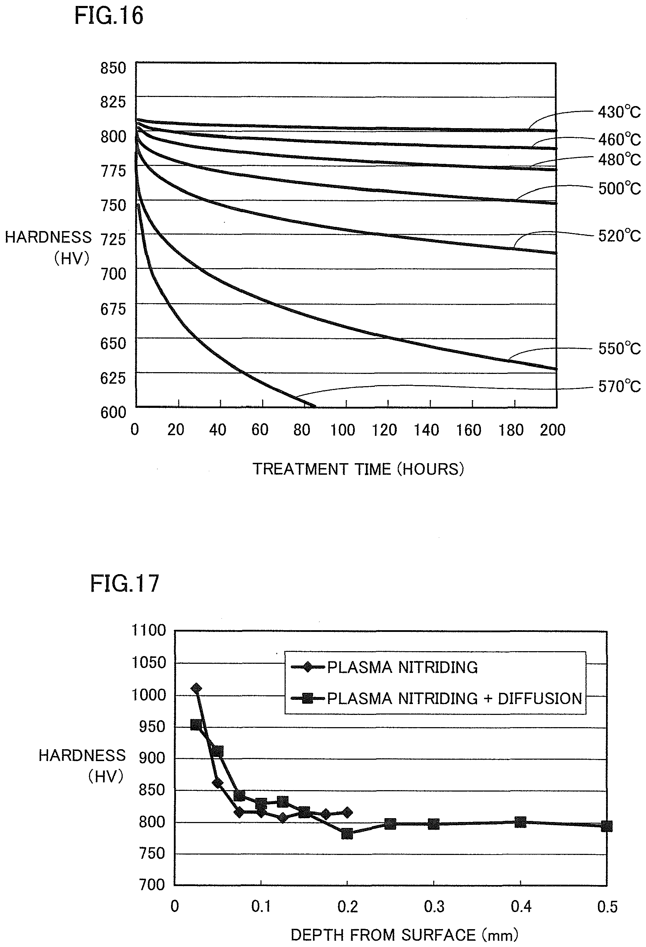

The results of the experiments will now be described with reference to Fig. 16 and Fig. 17. Referring to Fig. 16, the axis of abscissas shows heat treatment times (diffusion times), and the axis of ordinates shows hardness levels of the specimens. Referring to Fig. 17, the axis of abscissas shows depths (distances) from the surfaces, and the axis of ordinates shows hardness levels. Referring to Fig. 17, rhombuses show hardness levels of the specimens not yet subjected to the diffusion steps, and squares show hardness levels of the specimens subjected to the diffusion steps of maintaining the same at 480°C for 50 hours.

Referring to Fig. 16, the hardness of each specimen is reduced in a shorter time as the diffusion temperature is increased, while the reduction in the hardness is not more than 40 HV even if the diffusion treatment is performed for 200 hours and influence exerted by the reduction in the hardness of the matrix (hardness in a region not influenced by penetration of nitrogen resulting from the plasma nitriding) on the hardness of the surface layer portion is reduced when the diffusion temperature reaches 480°C. When the diffusion temperature reaches 460°C, the reduction in the hardness is not more than 25 HV even if the diffusion treatment is performed for 200 hours, and influence exerted by the reduction in the hardness of the matrix on the hardness of the surface layer portion is further reduced. When the diffusion temperature reaches 430°C, the reduction in the hardness is not more than 10 HV even if the diffusion treatment is performed for 200 hours, and the reduction in the hardness of the matrix hardly influences the hardness of the surface layer portion.

Referring to Fig. 17, on the other hand, the actual reduction in the hardness of the matrix substantially coincides with the results of analysis shown in Fig. 16 when the diffusion step of maintaining each specimen at 480°C for 50 hours is carried out, and the results of analysis shown in Fig. 16 conceivably coincide with the results of the actual heat treatment.

From the aforementioned results of the experiments, the heating temperature (diffusion temperature) in the diffusion step must be set to not more than 480°C, and is preferably set to not more than 460°C, in view of making nitrogen penetrating into steel reach a desired region while suppressing influence exerted by reduction in the hardness of the matrix on the hardness of the surface layer portion. When the heating temperature is set to not more than 430°C, the diffusion step can be carried out while hardly exerting influence by reduction in the hardness of the matrix on the hardness of the surface layer portion. While the heating temperature in the diffusion step is preferably further reduced in view of suppressing influence exerted by reduction in the hardness of the matrix on the hardness of the surface layer portion, this heating temperature is preferably set to at least 300°C, in order to prevent the time required for making nitrogen penetrating into steel reach the desired region from being increased beyond an allowable limit in actual production steps.

From the aforementioned results of the experiments, the heating temperature (diffusion temperature) in the diffusion step must be set to not more than 480°C, and is preferably set to not more than 460°C, in view of making nitrogen penetrating into steel reach a desired region while suppressing influence exerted by reduction in the hardness of the matrix on the hardness of the surface layer portion. When the heating temperature is set to not more than 430°C, the diffusion step can be carried out while hardly exerting influence by reduction in the hardness of the matrix on the hardness of the surface layer portion. While the heating temperature in the diffusion step is preferably further reduced in view of suppressing influence exerted by reduction in the hardness of the matrix on the hardness of the surface layer portion, this heating temperature is preferably set to at least 300°C, in order to prevent the time required for making nitrogen penetrating into steel reach the desired region from being increased beyond an allowable limit in actual production steps.

It should be understood that the embodiments disclosed herein are illustrative and non-restrictive in any respect. The scope of the present invention is defined by the terms of the claims, rather than the description above.

### INDUSTRIAL APPLICABILITY

The present invention provides a method of heat treatment for steel and a method of producing a mechanical component, that are advantageously applicable in particular to methods of heat treatment for steel that include the step of nitriding an object to be treated that is formed of steel containing at least 3.75 mass % of chromium, and methods of producing mechanical components formed of steel containing at least 3.75 mass % of chromium and having a surface layer portion nitrided.

## Claims

1. A method of heat treatment for steel, comprising the steps of:
quench-hardening a steel containing at least 0.77 mass % and not more than 0.85 mass % of carbon, at least 0.01 mass % and not more than 0.25 mass % of silicon, at least 0.01 mass % and not more than 0.35 mass % of manganese, at least 0.01 mass % and not more than 0.15 mass % of nickel, at least 3.75 mass % and not more than 4.25 mass % of chromium, at least 4 mass % and not more than 4.5 mass % of molybdenum and at least 0.9 mass % and not more than 1.1 mass % of vanadium with a remainder consisting of iron and impurity;
plasma-nitriding said quench-hardened steel; and
maintaining said plasma-nitrided steel at a diffusion temperature of at least 300°C and not more than 480°C,
wherein said diffusion step is performed after the plasma-nitriding step is completed.

2. The method of heat treatment for steel according to claim 1, wherein said diffusion temperature is not more than 430°C.

3. A method of producing a mechanical component, comprising the steps of:
preparing a steel member formed of a steel containing at least 0.77 mass % and not more than 0.85 mass % of carbon, at least 0.01 mass % and not more than 0.25 mass % of silicon, at least 0.01 mass % and not more than 0.35 mass % of manganese, at least 0.01 mass % and not more than 0.15 mass % of nickel, at least 3.75 mass % and not more than 4.25 mass % of chromium, at least 4 mass % and not more than 4.5 mass % of molybdenum and at least 0.9 mass % and not more than 1.1 mass % of vanadium with a remainder consisting of iron and impurity, and generally shaped in a form of a mechanical component; and
performing a heat treatment including quenching and nitriding said steel member, said heat treatment being performed according to the method of claim 1.

## Patentansprüche

1. Wärmebehandlungsverfahren für Stahl, umfassend die folgenden Schritte:
Abschreckhärten eines Stahl, welches mindestens 0,77 Masse% und nicht mehr als 0,85 Masse% Karbon, mindestens 0,01 Masse% und nicht mehr als 0,25 Masse% Silizium, mindestens 0,01 Masse% und nicht mehr als 0,35 Masse% Mangan, mindestens 0,01 Masse% und nicht mehr als 0,15 Masse% Nickel, mindestens 3,75 Masse% und nicht mehr als 4,25 Masse% Chrom, mindestens 4 Masse% und nicht mehr als 4,5 Masse% Molybdän und mindestens 0,9 Masse% und nicht mehr als 1,1 Masse% Vanadium mit einem Restbestand bestehend aus Eisen und einem Fremdstoff enthält;
Plasmanitrieren des abschreckgehärteten Stahls;
und Halten des plasmanitrierten Stahls auf einer Diffusionstemperatur von mindestens 300°C und nicht mehr als 480°C,
wobei der Diffusionsschritt durchgeführt wird nachdem der Schritt des Plasmanitrierens abgeschlossen ist.

2. Wärmebehandlungsverfahren für Stahl nach Anspruch 1, wobei die Diffusionstemperatur nicht mehr als 430°C beträgt.

3. Verfahren zur Herstellung eines mechanischen Bestandteils, umfassend die folgenden Schritte:
Bearbeiten eines Stahlelements, welches aus einem Stahl gebildet ist, der mindestens 0,77 Masse% und nicht mehr als 0,85 Masse% Karbon, mindestens 0,01 Masse% und nicht mehr als 0,25 Masse% Silizium, mindestens 0,01 Masse% und nicht mehr als 0,35 Masse% Mangan, mindestens 0,01 Masse% und nicht mehr als 0,15 Masse% Nickel, mindestens 3,75 Masse% und nicht mehr als 4,25 Masse% Chrom, mindestens 4 Masse% und nicht mehr als 4,5 Masse% Molybdän und mindestens 0,9 Masse% und nicht mehr als 1,1 Masse% Vanadium mit einem Restbestand bestehend aus Eisen und einem Fremdstoff enthält, und im allgemeinen in Form eines mechanischen Bestandteils geformt ist; und
Durchführung einer Wärmebehandlung inklusive Abschrecken und Nitrieren des Stahlelements, wobei die Wärmebehandlung nach dem Verfahren des Anspruchs 1 durchgeführt wird.

## Revendications

1. Procédé de traitement thermique pour de l'acier, comprenant les étapes de :
durcissement par trempe d'un acier contenant au moins 0,77 % en masse et pas plus de 0,85 % en masse de carbone, au moins 0,01 % en masse et pas plus de 0,25 % en masse de silicium, au moins 0,01 % en masse et pas plus de 0,35 % en masse de manganèse, au moins 0,01 % en masse et pas plus de 0,15 % en masse de nickel, au moins 3,75 % en masse et pas plus de 4,25 % en masse de chrome, au moins 4 % en masse et pas plus de 4,5 % en masse de molybdène et au moins 0,9 % en masse et pas plus de 1,1 % en masse de vanadium, un reste étant constitué de fer et d'impureté ;
nitruration au plasma dudit acier durci par trempe ; et
maintien dudit acier nitruré au plasma à une température de diffusion d'au moins 300 °C et de pas plus de 480 °C,
dans lequel ladite étape de diffusion est réalisée après achèvement de ladite étape de nitruration au plasma.

2. Procédé de traitement thermique pour de l'acier selon la revendication 1, dans lequel ladite température de diffusion n'est pas supérieure à 430 °C.

3. Procédé de production d'un composant mécanique, comprenant les étapes de :
préparation d'un organe en acier formé d'un acier contenant au moins 0,77 % en masse et pas plus de 0,85 % en masse de carbone, au moins 0,01 % en masse et pas plus de 0,25 % en masse de silicium, au moins 0,01 % en masse et pas plus de 0,35 % en masse de manganèse, au moins 0,01 % en masse et pas plus de 0,15 % en masse de nickel, au moins 3,75 % en masse et pas plus de 4,25 % en masse de chrome, au moins 4 % en masse et pas plus de 4,5 % en masse de molybdène et au moins 0,9 % en masse et pas plus de 1,1 % en masse de vanadium, un reste étant constitué de fer et d'impureté, et généralement façonné en forme d'un composant mécanique ; et
réalisation d'un traitement thermique incluant une trempe et une nitruration dudit organe en acier, ledit traitement thermique étant réalisé selon le procédé de la revendication 1.
